# EUROPEAN PATENT APPLICATION

(11) **EP 2 384 636 A1**
(43) Date of publication of application: **09.11.2011**
(21) Application number: 10004706.7
(22) Date of filing: 04.05.2010
(51) Int. Cl.: A22C 11/10, B65B 9/12

(54) **Displacer arrangement with covering element**

(71) Applicant: Poly-clip System GmbH & Co. KG, 60489 Frankfurt am Main (DE)
(72) Inventor: Zurwieden, Martin, 48336 Sassenberg (DE)
(74) Representative: Eisenführ, Speiser & Partner

(57) **Abstract**

The present invention relates to a displacer arrangement for gathering a tubular or bag-shaped packing casing filled with filling material, like sausage meat, including at least a first displacer unit (1). Displacer unit (1) comprises a first, outer ring member (10) having a central axis (A) at least approximately vertically arranged to a plane defined by the first ring member (10), a second, inner ring member (20) at least approximately coaxially arranged to the central axis (A) and within first ring member (10), and rotatable held by first ring member (10), and at least three approximately strip-shaped displacer elements (30, 30', 30"). Displacer elements (30, 30', 30") have an effective surface (46) facing the central axis (A), and first and second ends (32, 32', 32"; 34, 34', 34"). First ends (32, 32', 32") of displacer elements (30, 30', 30") are pivotally mounted to first ring member (10) in regular intervals. Second ends (34, 34', 34") of displacer elements (30, 30', 30") are at least approximately radially guidably mounted to the second ring member (20) in regular intervals. Displacer elements (30, 30', 30") are curved in a plane parallel to the plane defined by first ring member (10) to overlap each other while rotating second ring member (20). Displacer elements (30, 30', 30") further comprise a break or crank (36) in the central region of their effective surface (46). Displacer elements (30, 30', 30") are movable between an opened and a closed position, in the open position, displacer elements (30, 30', 30") are moved outwardly, away from central axis (A), and, in the closed position, displacer elements (30, 30', 30") are moved toward the central axis (A) for gathering the tubular or bag-shaped packing casing. Moreover, at least one covering element (50) is provided to the central region of one of displacer elements (30, 30', 30"), thereby at least partially covering a displacer hole defined by displacer elements (30, 30', 30") in their closed position.

## Description

The present invention relates to a displacer arrangement for gathering a tubular or bag-shaped packing casing according to the preamble of independent claim 1.

In particular, the present invention relates to a displacer arrangement for gathering a tubular or bag-shaped packing casing filled with filling material, like sausage meat, including at least a first displacer unit. The displacer unit comprises a first, outer ring member having a central axis at least approximately vertically arranged to a plane defined by the first ring member and a second, inner ring member at least approximately coaxially arranged to and within the first ring member, and rotably held by the first ring member. The displacer unit further comprises at least three approximately strip-shaped displacer elements having an effective surface facing the central axis, and first and second ends, the displacer elements are pivotally mounted to the first ring member in regular intervals by their first ends, the second ends of displacer elements are at least approximately radially guidably mounted to the second ring member in regular intervals. The displacer elements are curved in a plane parallel to the plane defined by the first ring member to overlap each other while rotating the second ring member further comprising a ments are curved in a plane parallel to the plane defined by the first ring member to overlap each other while rotating the second ring member further comprising a break or crank in the central region of their effective surface. Furthermore, the displacer elements are movable between an opened and a closed position, wherein in the open position, the displacer elements are moved outwardly away from the central axis, and, in the closed position, the displacer elements are moved toward the central axis for gathering the sausage-shaped or bag-shaped packing casing.

In the production of sausage-shaped products, like sausages, clipping machines are used. In these machines, filling material is fed into respective tubular or bag-shaped packing casings, and closure means, like substantially U-shaped closure clips, are applied to said packing casing for closing the packing casing. Additionally, loops for pendulous storing said packed goods, wrist straps and/or labels may be attached to the packing casing by means of the closure clip.

A generally known clipping machine for closing said packing casing and for attaching a loop or the like to the packing casing comprises, amongst others, at least one displacer unit including displacer elements for gathering the filled tubular or bag-shaped packing casing and for providing a plait-like portion, and a punch and die assembly for attaching at least one closure clip to the plait-like portion and for closing said clip around said plait-like portion. The at least one displacer unit may be of different kind, such as a pair of displacer shears or displacer plates, which are moved towards each other, thereby gathering the filled tubular or sausage-shaped or bag-shaped packing casing positioned between said displacer shears.

Another kind of a displacer unit is a so-called iris-displacer. Such an iris-displacer is e.g. known from EP patent 1 196 037. Said iris-displacer has constricting or displacer elements in the form of strips pivotally mounted at one end to a first ring. The second ends of the strip-shaped displace elements are attached to a second ring which is coaxially arranged inside and rotatable held by the first ring. Said displacer elements may reversibly be pivoted towards each other by rotating the second ring, thereby changing the size of the opening defined by the second ring. A filled tubular or sausage-shaped or bag-shaped packing casing is provided in the displacer unit coaxially to the central axis of the first and second ring. For gathering the filled packing casing, the second ring is rotated in a manner that the displacer elements are pivoted towards each other, thereby continuously reducing the opening defined by the second ring up to a minimum. In case that a plait-like portion shall be formed to the filled packing casing for applying one or two closure clips thereto, a second iris-displacer is positioned adjacent to and coaxially aligned with the first displacer. First and second displacers are simultaneously closed and, in order to form said plait-like portion, at least one of the displacers is moved away from the respective other along the central axis. Thereby, the filling material inside the packing casing is removed from the plait-like portion.

The displacer elements of an iris-displacer as described above, are arranged in a common plane which is approximately parallel to the plane defined by the first and second ring. Thus, by moving the displacer elements towards each other during the constricting process up to the minimum clearance, a remaining opening has to be provided, for accommodating at least the packing casing material. To prevent the gathered packing material from being damaged, e.g. depending on the sensitivity of the packing material, a closer constricting of the packing material may lead to unintended damages.

Thus, it is an object of the present invention, to provide a displacer arrangement with which the closing of tubular or bag-shaped packing casing can be improved.

The aforesaid object is achieved by the features of claim 1. Advantageous configurations of the invention are described in claims 2 to 11.

According to the present invention, there is provided a displacer arrangement for gathering a tubular or bag-shaped packing casing filled with filling material, like sausage meat, including at least a first displacer unit. The displacer unit comprises a first, outer ring member having a central axis at least approximately vertically arranged to a plane defined by the first ring member, and a second, inner ring member at least approximately coaxially arranged to the central axis and within the first ring member, and rotatably held by the first ring member. The at least one displacer unit further comprises at least three approximately strip-shaped displacer elements each having an effective surface facing the central axis, and first and second ends, wherein the first ends of the displacer elements are pivotally mounted to the first ring member in regular intervals, and the second ends of displacer elements are at least approximately radially guidably mounted to the second ring member in regular intervals. The displacer elements are curved in a plane parallel to the plane defined by the first ring member to overlap each other while rotating the second ring member, the displacer elements further comprising a break or crank in the central region of their effective surface. Moreover, the displacer elements are movable between an opened and a closed position, in the opened position, the displacer elements are moved outwardly, away from the central axis, and, in the closed position, the displacer elements are moved toward the central axis for gathering the tubular or bag-shaped packing casing.

Moreover, according to the present invention, at least one first covering element is provided to the central region of one of the displacer elements, thereby at least partially covering a displacer hole defined by the displacer elements in their closed position. By at least partially covering the displacer hole, a plait-like portion formed by gathering the sausage-shaped or tubular or bag-shaped packing casing, is deflected about the covering element. Thereby, the formation of a plait-like portion which is free from filling material is increased. It has to be noted that several first covering elements at different displacer elements, on the same side of the displacer elements or on both sides of the displacer elements, i.e. the front and back sides of the displacer elements when viewed in the direction of control axis A can be provided.

In a preferred embodiment of the present invention, a second covering element is provided to the central region of the displacer element on the opposite site of said displacer element. Said second covering element provides an additional deflection of the plat-like portion formed by the gathered sausage-shaped or tubular or bag-shaped packing casing, whereby the effect of forming a plait-like portion which is free from filling material is additionally increased. It has to be noted that the at least one second covering element can be arranged at the same displacer element at which the at least one first covering element is provided, but on the opposite side thereof, or on a different displacer element, but also on the opposite side.

In a preferred embodiment of the displacer arrangement, the effective surface of the displacer element comprises two nearly linear segments encompassing an obtuse angle. In this case, the covering element is aligned to the displacer element to cut off the tip of the obtuse angle formed by the effective surface of said displacer element. Thereby, the covering element forms a smooth transition from one linear section of the effective surface to the other and a damage of the packing casing can be avoided.

The covering element may be of any suitable form. In one embodiment, the covering element is formed by a flat sheet attached to the displacer element. A flat sheet, at one hand, allows the deflection of the plait-like packing casing portion. On the other hand, said flat material only requires a little additional space between the first and the second displacer unit, and thus, it does not impede the formation of a plait-like portion which is free from filling material. The material used for the flat covering element should have a respective rigidity to be not bent by the occurring forces, and may be made of stainless-steel or plastics, like fiber-reinforced plastics.

The covering element not necessarily needs to be a single part attached to a displacer element. According to another embodiment of the present invention, the covering element is formed by a protrusion extending from the effective surface of a displacer element towards the central axis. That means that the covering element can be integrally formed with a displacer element. Thereby, gaps or rims may be omitted, wherein casing or filling material may be deposited, allowing a high sanitary standard.

In case, that the covering element is formed by a protrusion extending from the effective surface of a displacer element in the same plane as defined by the respective displacer element, at least one of the remaining displacer elements should comprise a recess in the central region to be engaged by the protrusion. In this configuration, no additional space is required between the first and a probably provided second displacer unit, and the formation of a plait-like portion which is free from filling material, is increased.

The first displacer unit is previously described as to comprise at least three displacer elements. In an advantageous configuration, the first displacer unit comprise four displacer elements. It is also possible to provide five or more displacer elements per displacer unit. An increased number of displacer elements leads to a more circular displacer hole, and allows a more regular folded sausage-shped or tubular casing forming the plait-like portion.

For forming a plait-like portion, a second displacer unit is provided, including an outer and an inner ring element carrying further at least three approximately strip-shaped displacer elements, wherein the second displacer unit is arranged coaxial to the at least first displacer unit and parallel thereto and wherein the second displacer unit is reversibly movable towards the first displacer unit along the central axis of the first displacer unit. The second displacer unit, according to the present inventive idea, comprises at least one first covering element which is provided to the central region of one of the displacer elements. The provision of a second displacer unit allows forming a plait-like portion having a desired length.

Advantageously, if a second displacer unit is provided in the displacer arrangement, at least one second covering element may be arranged in the central region of one of the displacer elements on opposite to the site of the displacer element of said second displacer unit, providing the same advantageous effect like the second covering element of the first displacer unit.

Moreover, while moving the second displacer unit away from first displacer unit in order to form a plait-like portion, the gathered tubular casing is pulled through the minimum opening of the closed first displacer unit and stripped along an edge of the covering element, thereby additionally wiping filling material off from packing casing constituting the plat-like portion. Thus, the covering element improves the formation of a plait-like portion which is free from filling material.

Further advantageously, the second displacer unit is positioned with respect to the first displacer unit with an angular offset about the central axis. In this configuration, a displacer element of the first displacer unit is positioned opposite to the overlapping region of two displacer elements of the second displacer unit, thereby preventing the casing material to engage said overlapping region.

Normally, the first and second displacer units are synchronously opened and closed during forming a plait-like portion. In specific cases, e.g. while treating specific casing material or filling stuff, it may be necessary that the first and second displacer units are movable between the open and closed position in or out of synchronization with one another.

The covering element itself may be provided as a single part for being attached to a displacer element in order to upgrade existing displacer units to allow a cost-efficient improvement of said existing machines.

According to the embodiment, wherein the covering element is formed by a protrusion extending from the effective surface of the displacer element, the displacer element may be provided as a replacement part in order to upgrade existing displacer units. It has to be understood, that also at least one of the remaining displacer elements has to be replaced by a displacer element including the recess to be engaged by the covering.

Further advantages and a preferred embodiment will be described in the following together with the drawings listed below. The expressions "left", "right", "below" and "above" used in the below description are referred to the drawings in an alignment such that the reference numbers used can be read in normal.

In the drawings:
- Fig. 1:: is a schematically, perspective view to the front side of a displacer unit according to the present invention in an opened position;
- Fig. 2:: is a schematically, perspective view to the front side of a displacer unit according to the present invention in a partially closed position;
- Fig. 3:: is a schematically, perspective view to the front side of a displacer unit according to the present invention in a closed position;
- Fig. 4:: is a schematically, perspective view to the rear side of a displacer unit according to the present invention in the closed position as shown in Fig. 3;
- Fig. 5:: is a schematically front view of a displacer element of the displacer unit according to the present invention;
- Fig. 6:: is a schematically side view of a displacer element of the displacer unit according to the present invention; and
- Fig. 7:: is a schematically rear view of a displacer element of the displacer unit according to the present invention;

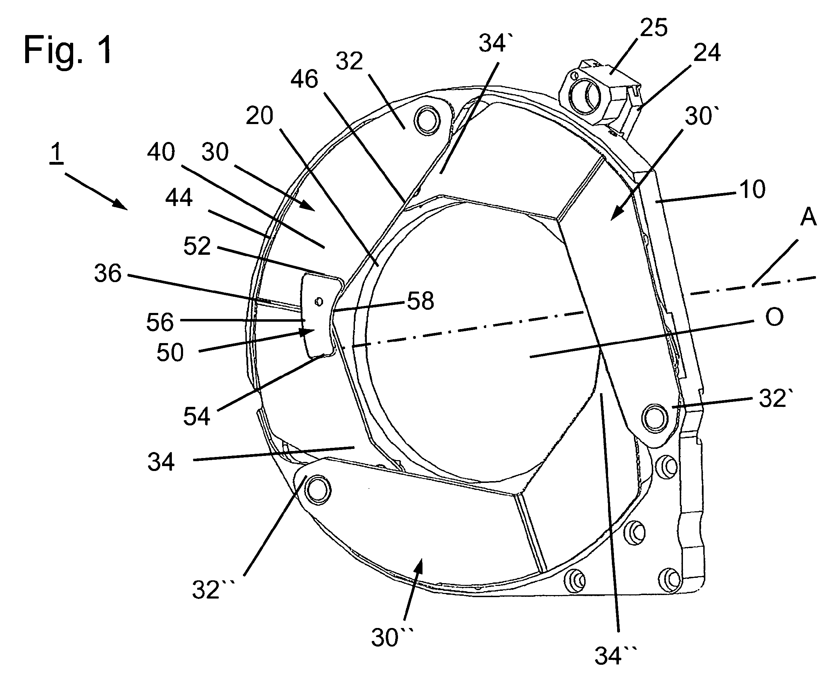

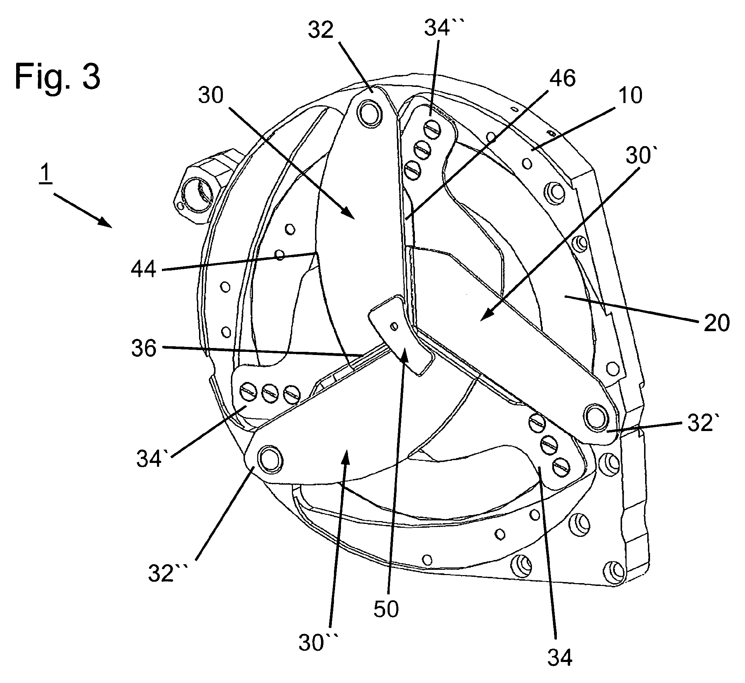

Fig. 1 shows a schematically, perspective view to the front side of an embodiment of a displacer unit 1 according to the present invention in an opened position. Displacer unit 1 comprises a first outer ring member or first ring 10, a second inner ring member or second ring 20 and three displacer elements 30, 30', 30". Second ring 20 is disposed inside first ring 10 coaxially to a central axis A of first ring 20. First and second rings 10, 20 thereby define a common plane which is vertically arranged to central axis A. Displacer unit 1 has a central opening O which is formed by first and second rings 10, 20 and which corresponds to the inner diameter of second ring 20. A lever 24 is attached to second ring 20 and projects radially outwardly from second ring 20, protruding first ring 10. Displacer elements 30, 30', 30" are approximately strip-shaped and have first and second ends 32, 32', 32"; 34, 34', 34" as well as a central region being provided between the first and second ends 32, 32', 32"; 34, 34', 34" and being not designated. Displacer elements 30, 30', 30" are pivotally attached to first ring 10 by their first ends 32, 32', 32" in regular intervals. Second ends 34, 34', 34" of displacer elements 30, 30', 30" are attached to second ring 20 in regular intervals, too. According to the present embodiment, two adjacent displacer elements encompass an angle of at least approximately 120°, when displacer unit 1 is in the closed configuration as shown in Fig. 3.

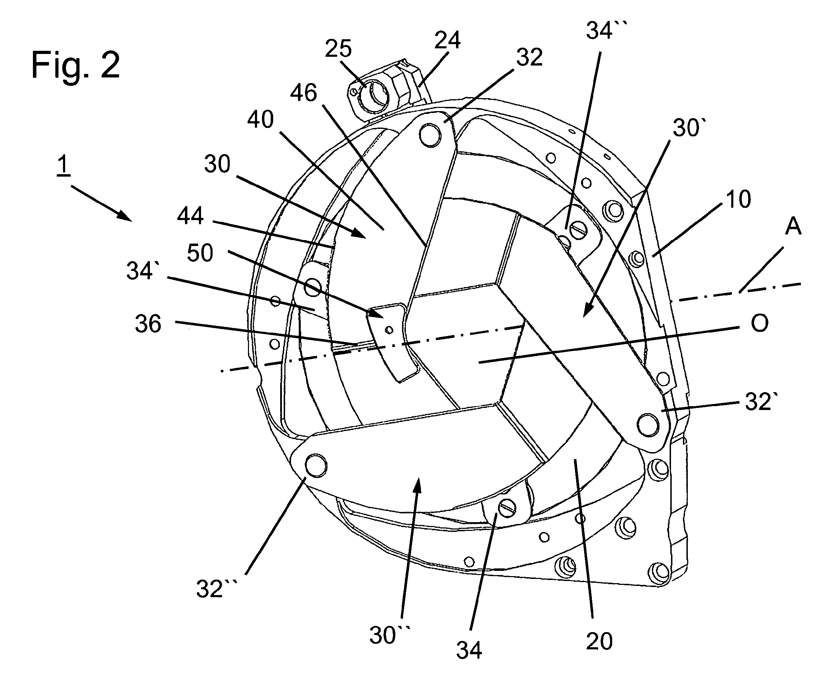

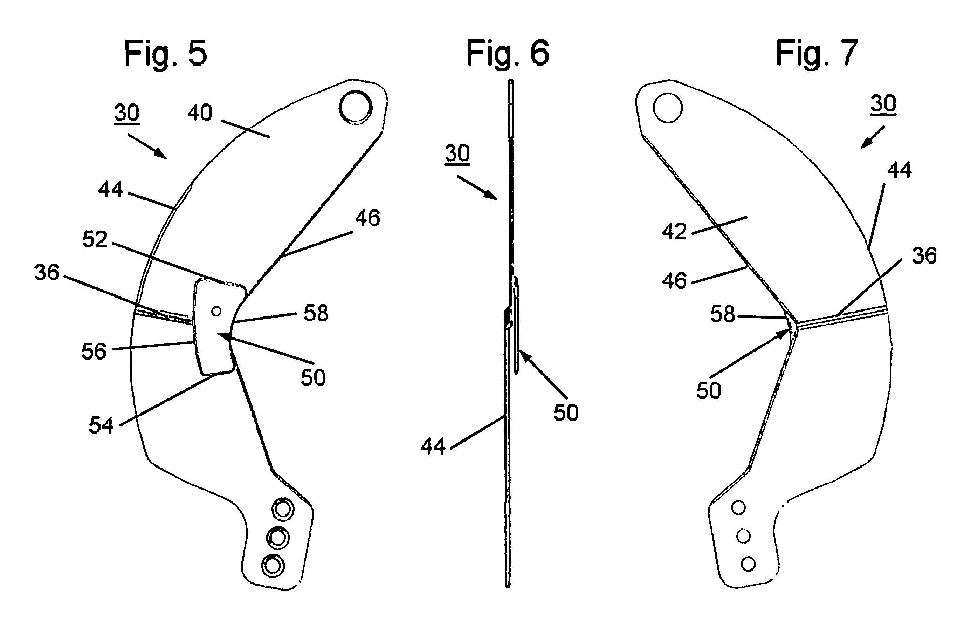

As it can be seen in Figs. 1 to 3 showing displacer unit 1 in different positions, displacer elements 30, 30', 30" partially overlap each other. Displacer elements 30, 30', 30" are generally equal to each other. Thus, the configuration of all displacer elements 30, 30', 30" will be described exemplarily by one displacer element 30, 30', 30", in the following using only reference number 30 and referring additionally to Figs. 5 to 7.

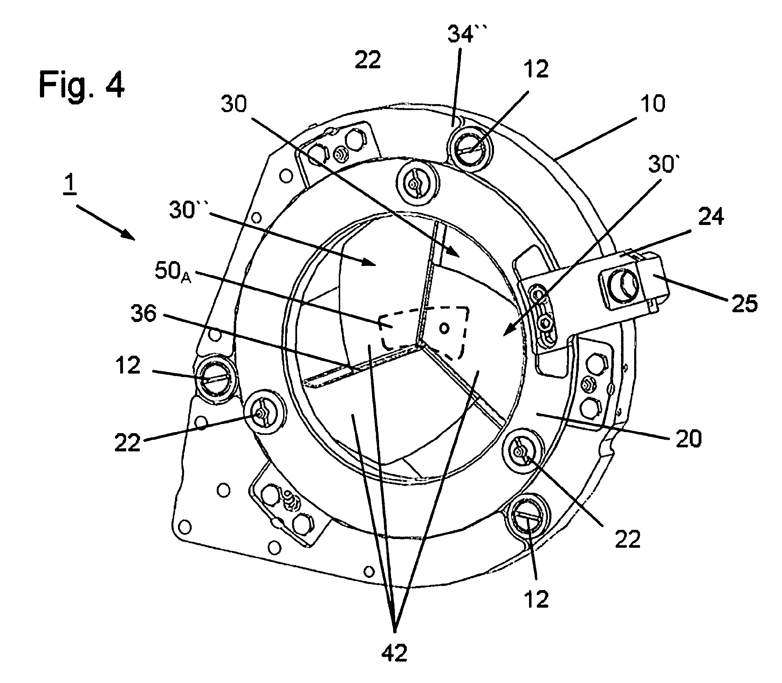

Displacer element 30 is made of a flat sheet material defining a plane which is arranged parallel to first and second rings 10, 20. Displacer element 30 has a front surface 40 facing away from rings 10, 20, a rear surface 42 (shown in Figs. 4 and 7) parallel to front surface 40 and, amongst others, two small side surfaces or edges, respectively, 44, 46 facing in a direction parallel to the plane defined by first and second rings 10, 20. Side surface 44 is directed away from central axis A, whereas side surface 46 points to central axis A. For allowing displacer element 30 to overlap or to be overlapped by one or both of the remaining displacer elements 30', 30", a cranked section 36 is provided in the central region of displacer element 30, which will be described in more detail in conjunction with Figs. 5 to 7 below. Cranked section or crank 36 defines a crank-line which is nearly radially arranged with respect to central axis A. Displacer element 30 extends between its first and second ends 32, 34 in an approximately semicircular shape. As it can be seen in detail in Fig. 1, side surface 44 has a semicircular contour the radius of which corresponds to the outer radius of first ring 10. In contrast thereto, side surface 46 of displacer element 30 facing central axis A of first ring 10, has an angled contour consisting of two linear segments touching each other in crank 36. The two linear sections of side surface 46 encompass an obtuse angle.

As it further can be seen from Figs. 1 to 3 and 5 to 7, a covering element 50 is provided in the central region of displacer element 30. Covering element 50 has a flat couture of an approximately trapezoid form. Covering element 50 has two shorter nearly parallel edges 52, 54 and two longer edges 56, 58. Covering element 50 is attached to the central region of front surface 40 of displacer element 30 in a manner that edges 52, 54 are aligned parallel to crank 36. Moreover, the two corners of covering element 50 encompassed by edges 52, 58 and 54, 58, are aligned to the two linear segments of side surface 46. Thereby, edge 58 cuts off the tip of the angle formed by said two linear segments of side surface 46. Side surfaces 56, 58 are of a smoothly rounded shape. Covering element 50 may be fastened to displacer element 30 by welding, brazing, gluing or by any suitable fastening means, like screws or rivets.

Fig. 5 to 7 are schematically front side and rear views of a displacer element of the displacer unit according to the present invention. As it can be seen from Figs. 5 and 7, first and second ends 32 and 34 of displacer element 30, and thus, also displacer elements 30', 30", comprise openings or holes for being attached to first and second rings 10, 20 by fixing means 12, 22. Moreover, as it can best seen in Fig. 6, displacer element 30 comprises crank 36 in its central region, shifting the upper portion of displacer element 30 with respect to the lower portion of displacer element 30 about a distance which at least corresponds to the thickness of displacer element 30.

Covering element 50 is attached to front surface 40 of displacer element 30 in the region of crank 36, thereby partially overlapping both, the upper and the lower part of displacer element 30, which are separated by crank 36. Moreover, by overlapping the lower part of displacer element 30, covering element 50 forms a gap between itself and the lower part of displacer element 30. By closing displacer unit 1, one of the remaining displacer elements 30', 30" may engage said gap.

Fig. 4 shows a perspective view to the rear side of displacer unit 1 according to the present invention in the closed position as shown in Fig. 3. Second ring 20 is disposed inside first ring 10. First and second rings 10, 20 comprise fixing means 12, 22 for pivotally fixing first and second ends 32, 32', 32"; 34, 34', 34" of displacer elements 30, 30', 30" thereto. Lever 24 is fixedly attached to second ring 20 by its first end, a second end of lever 24 projects radially outwardly from second ring 20. By pivoting lever 24 about central axis A, second ring 20 may be rotated inside first ring 10, thereby opening and closing central opening O in displacer unit 1 for gathering and releasing filled packing casing coaxially positioned with central axis A inside displacer unit 1. A bushing 25 is radially slidably connected to the second end of lever 24 for being connected to a respective drive and for balancing radially movements while second ring 20 is rotatably driven by the respective drive.

According to the present invention, a second displacer unit may be arranged coaxially to displacer unit 1, facing each other with their front sides, thereby forming a displacer arrangement. Said second displacer unit may be coupled to displacer unit 1 by respective coupling means which allow second displacer unit to be shifted coaxially away from displacer unit 1.

As mentioned above, in the production of sausage-shaped products, like sausages, clipping machines are used for feeding filling material into respective tubular or sausage-shaped or bag-shaped packing casings, and for applying closure clips to said packing casing for closing the packing casing. Additionally, loops for pendulous storing said packed goods, wrist straps and/or labels may be attached to the packing casing by means of the closure clip.

A generally known clipping machine comprises a filling tube for feeding filling material in a feeding direction into a tubular casing which may be stored on the filling tube, and which is pulled there off while being filled. At least one displacer unit 1 is coaxially arranged in the region of the front end of the filling tube facing the filling tube with its rear side. A second displacer unit 1 can coaxially be arranged to the first displacer unit 1 in closed proximity thereto with its front side. While filling, tubular casing extends coaxially to central axis A through first and second displacer unit 1, which are in their opened position according to Fig. 1, or the central opening O, respectively.

For gathering the filled tubular casing and for forming a plait-like portion which is free from filling material, second ring 20 is rotated counterclockwise from an opened position as shown in Fig. 1 into a closed position of Fig. 3, by acting on lever 24 . While rotating second ring 20 counterclockwise, displacer elements 30, 30', 30" are pivoted about their first ends 32, 32', 32", displacer elements 30, 30', 30" overlap each other and side surfaces 46 which are the effective surfaces of displacer elements 30, 30', 30", move towards each other until central opening O is reduced to a minimum diameter corresponding to a minimum diameter of the plait-like portion to be formed. Covering elements 50 of displacer units 1 overlap said minimum opening. Thus, a plait-like portion formed by closing displacer units 1, is guided along central axis A through said minimum opening between displacer elements 30, 30', 30", bent about covering elements 50 of first and second displacer units 1 along a line parallel and with an offset to central axis A, and guided back to the central axis A for extending coaxially thereto through the minimum opening of closed second displacer unit.

In order to form a plait-like portion, second displacer unit is coaxially moved away from first displacer unit 1 in the feeding direction about a length corresponding to the length of the plait-like portion to be formed. While moving second displacer unit away from first displacer unit 1, gathered tubular casing is pulled through the minimum opening of closed first displacer unit 1 and stripped along edge 58 of covering element 50, thereby additionally wiping filling material off from packing casing constituting the plat-like portion. Thus, covering element 50 improves the formation of a plait-like portion free from filling material.

After the plait-like portion is formed in the described manner, two closure clips are attached thereto, a first closure clip in order to close the second end of the actually filled packing casing section to form a sausage-shaped product, and a second closure clip in order to close the first end of the subsequent packing casing section to be filled. Together with one of the first or second closure clip, a suspension element, like a suspension loop, may be attached to the sausage-shaped product for handling and storing said sausage-shaped product, e.g. on a smoking rod.

Second displacer unit may be of the same configuration displacer unit 1. In case of positioning displacer units 1 in the previously described manner facing each other with their front sides, the actuation directions for rotating second rings 20 are opposite to each other. Thus, in case of using one single drive for driving both, first and second displacer units 1, a respectively transmission is necessary. Otherwise, it is also possible, that second displacer unit is mirror inverted to first displacer unit 1. In this configuration, levers 24 for driving first and second displacer units 1 may be coupled to a common drive without an additional transmission device.

Displacer elements 30, 30', 30" are fixedly, but pivotally attached to first ring 10 by their first ends 323, 32', 32" via fixing means 12. Second ends 34, 34', 34" are pivotally attached to second ring 20 by fixing means 22. Diameter of second ring 20 which is positioned inside first ring 10, is smaller than the diameter of first ring 10. Thus, for allowing displacer elements 30, 30', 30" to be pivoted about their first ends 32, 32', 32", fixing means 22 have to be composed to allow not only a pivotal movement, but also a radially movement of the second ends 34, 34', 34" of displacer elements 30, 30', 30". Thus, fixing means comprise linear guide means (not shown), e.g. in the form of dovetail guide or any other suitable guide means.

Displacer unit 1, in the preceding, is described as to comprise one covering element 50 attached to the front side of one of displacer elements 30, 30', 30". Naturally, a second covering element 50_{A} (shown in dashed lines in Fig. 4) may be provided at the rear side of one of the displacer elements 30, 30', 30". A second covering element may increase the effect of additionally wiping filling material off from packing casing constituting the plat-like portion.

It has to be understood, that also second displacer unit may be provided with a second covering element for further increasing the above described effect.

In special cases, it may be sufficient that only one of the displacer units 1 is provided with one covering element. Alternatively, a second covering element may be provided to the one displacer unit.

Displacer elements 30, 30', 30" and covering element 50 may be made of any suitable material like metal or plastic, according to the packing material and the kind and size of sausages to be produced. To avoid damages of displacer elements 30, 30', 30", covering element 50 and/or the packing material, in one displacer unit, said elements should be made of the same materials.

According to an alternatively embodiment of covering element 50, displacer unit 30 may comprise a protrusion formed integrally thereto. Said protrusion may extend from the central region of displacer element 30 towards central axis A of first ring 10. In a first embodiment, said protrusion may extend in the same plane like covering element 50. Accordingly, no additional changes have to be made to the remaining displacer elements 30', 30".

In a second alternative embodiment of displacer element 30, said protrusion may extend in the same plane like one of the upper or lower part of displacer element 30 and may have partially the thickness of displacer element 30. In this case, at least one of the remaining displacer elements 30', 30" have to be adapted to provide a recess to be engaged by the protrusion, when the displacer unit is in the closed position.

In case that covering element 50 is attached to displacer element 30, covering element 50 or displacer element 30 together with covering element 50 attached thereto may be provided as spare parts for upgrading existing clipping machines or displacer units.

Alternatively, in case that displacer element 30 comprises a protrusion integrally formed thereto, and at least one of the remaining displacer elements 30', 30" comprise a respective recess to be engaged by said protrusion, a set of displacer elements 30, 30', 30" may be provided a spare parts for upgrading existing clipping machines or displacer units, respectively.

In case that a clipping machine comprises first and second displacer units 1, displacer units 1 are normally synchronously closed and opened for forming a plait-like portion. It is also possible to close and open the first and second displacer units 1 out of synchronization. That may be necessary in cases where specific casing materials are used or specific filling materials have to be packed, e.g. extremely ductile filling stuff.

The first and second displacer units 1 are described as to comprise three displacer elements. It is also possible to provide four or more displacer elements per displacer unit 1. In that cases, the displacer hole has a more circular shape and the casing material will be folded more regular while forming a plait-like portion. This may be advantageous by treating sensitive casing material.

## Claims

1. A displacer arrangement for gathering a tubular or bag-shaped packing casing filled with filling material, like sausage meat, including at least a first displacer unit (1), comprising:
a first, outer ring member (10) having a central axis (A) at least approximately vertically arranged to a plane defined by the first ring member (10),
a second, inner ring member (20) at least approximately coaxially arranged to the central axis (A) within the first ring member (10) and rotatably held by the first ring member (10), and
at least three approximately strip-shaped displacer elements (30, 30', 30") each having an effective surface (46) facing the central axis (A), first and
second ends (32, 32', 32"; 34, 34', 34") and a central region arranged between the first and second ends (32, 32', 32"; 34, 34', 34"),
wherein the first ends (32, 32', 32") of the displacer elements (30, 30', 30") are pivotally mounted to the first ring member (10) in regular intervals and the second ends (34, 34', 34") of the displacer elements (30, 30', 30") are at least approximately radially guidably mounted to the second ring member (20) in regular intervals,
wherein the displacer elements (30, 30', 30") are curved in a plane parallel to the plane defined by the first ring member (10) to overlap each other while rotating the second ring member (20) and further comprise a break or crank (36) in the central region of their effective surface (46), and
wherein the displacer elements (30, 30', 30") are movable between an opened and a closed position, wherein, in the opened position, the displacer elements (30, 30', 30") are moved outwardly away from the central axis (A),
and wherein, in the closed position, the displacer elements (30, 30', 30") are moved toward the central axis (A) for gathering the tubular or bag-shaped packing casing,
**characterized in that** at least one first covering element (50) is provided to the central region of one of the displacer elements (30, 30', 30"), thereby at least partially covering a displacer hole defined by the displacer elements (30, 30', 30") in their closed position.

2. The displacer arrangement according to claim 1,
**characterized in that** at least one second covering element is provided to the central region of one of the displacer elements (30, 30', 30") on the side of the displacer elements (30, 30', 30") opposite to the side of the displacer elements (30, 30', 30") at which the at least first covering element (50) is provided.

3. The displacer arrangement according to claims 1 or 2,
wherein the effective surface (46) of the displacer element (30, 30', 30") comprises two nearly linear segments encompassing an obtuse angle; **characterized in that** the covering element (50) is aligned to the displacer element (30, 30', 30") to cut off the tip of the obtuse angle formed by the effective surface (46) of said displace element (30, 30', 30").

4. The displacer arrangement according to any of claims 1 to 3,
**characterized in that** the covering element (50) is formed by a flat sheet attached to the displacer element (30, 30', 30").

5. The displacer arrangement according to any of claims 1 to 4,
**characterized in that** the covering element (50) is formed by a protrusion extending from the effective surface (46) of a displacer element (30, 30', 30") towards the central axis (A).

6. The displacer arrangement according to claim 5,
**characterized in that** at least one of the remaining displacer elements (30, 30', 30") comprises a recess in the central region to be engaged by the protrusion.

7. The displacer arrangement according to any of claims 1 to 6,
chacterized in that the displacer unit (1) comprises four displacer elements.

8. The displacer arrangement according to any of claims 1 or 7,
wherein a second displacer unit is provided, including an outer and an inner ring element carrying further at least three approximately strip-shaped displacer elements, wherein the second displacer unit is arranged coaxial to the at least first displacer unit (1) and parallel thereto and wherein the second displacer unit is reversibly movable towards the first displacer unit (1) along central axis (A) of first displacer unit (1),
**characterized in that** second displacer unit comprises at least one first covering element which is provided to the central region of one of the displacer elements of second displacer unit.

9. The displacer arrangement according to claim 8,
**characterized in that** at least one second covering element is provided to the central region of one of the displacer elements on the side of the displacer elements opposite to the side of the displacer element of the second displacer unit at which the at least one first covering element is provided.

10. The displacer arrangement according to claims 8 or 9,
chacterized in that the second displacer unit is positioned with respect to the first displacer unit (1) with an angular offset about the central axis (A).

11. The displacer arrangement according to any of claims 8 to 10,
chacterized in that the first and second displacer units (1) are movable between the opened and closed position in or out of synchronization with one another.

12. A covering element for a displacer arrangement according to any of claims 1 to 6,
**characterized in that** covering element (50) is provided as a single part for being attached to a displacer element (30) in order to upgrade existing displacer units.

13. A displacer element according to claims 4 and 5,
**characterized in that** the displacer element (30, 30', 30") together with the covering element (50) is provided as a replacement part in order to upgrade existing displacer units (1).
